# FASCICULE DE BREVET EUROPEEN

(11) **EP 1 199 620 B1**
(45) Date de publication et mention de la délivrance du brevet: **08.04.2009**
(21) Numéro de dépôt: 01402247.9
(22) Date de dépôt: 29.08.2001
(51) Int. Cl.: G05D 16/16

(54) **Equilibreur des pressions eau chaude et eau froide des circuits d'eau sanitaire**
Druckausgleichvorrichtung für Warm- und Kaltwasserkreislauf in einer Sanitäranlage
Sanitary hot and cold water pressure balancing device

(30) Priorité: 31.08.2000 FR 0011154
(43) Date de publication de la demande: 24.04.2002
(73) Titulaire: Sassier, Anne, 28260 Berchères sur Vesgre (FR)
(72) Inventeur: Sassier, Anne, 28260 Berchères sur Vesgre (FR)

(56) Documents cités:
- EP-A- 0 654 628
- US-A- 2 825 361
- WKS: "Automatischer Durchflussregler" TECHNISCHE RUNDSCHAU,HALLWAG VERLAG. BERN,CH, vol. 62, no. 44, 16 octobre 1970 (1970-10-16), page 29 XP002147281 ISSN: 1023-0823

## Description

La présente invention concerne un dispositif pour équilibrer les pressions des circuits d'eau sanitaire chaude et froide à la plus petite des pressions de l'eau chaude et de l'eau froide.

Les circuits d'eau sanitaire chaude et froide pour l'habitat et les collectivités ne sont pas toujours à la même pression lorsqu'ils arrivent au point d'utilisation dit point de puisage. Cette différence de pression rend difficile le fonctionnement des appareils qui mélangent l'eau chaude et l'eau froide pour abaisser la température de l'eau chaude à une température choisie par l'utilisateur. L'invention permet de remédier à cet inconvénient. Elle est destinée à améliorer les conditions de réglage du mélange eau chaude et eau froide. Il existe plusieurs descriptions d'équilibreurs de pressions, en particulier ceux du type symétrique tel que celui décrit dans le brevet US 5,975,107.

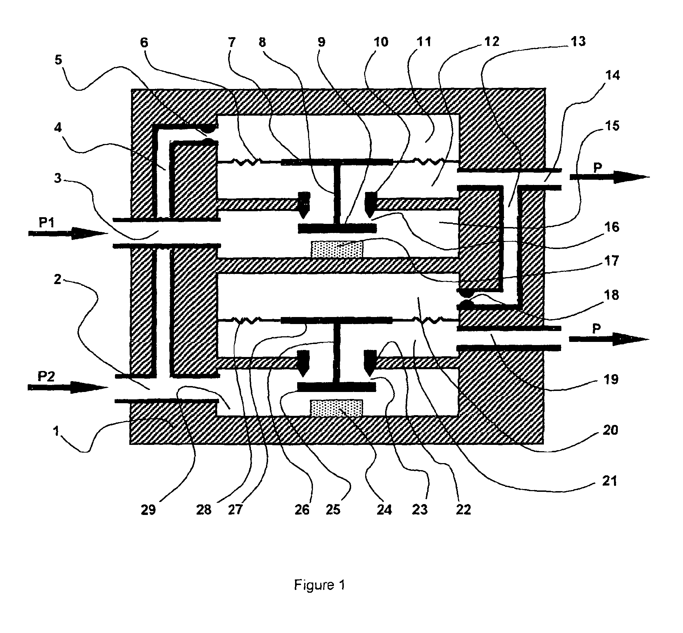

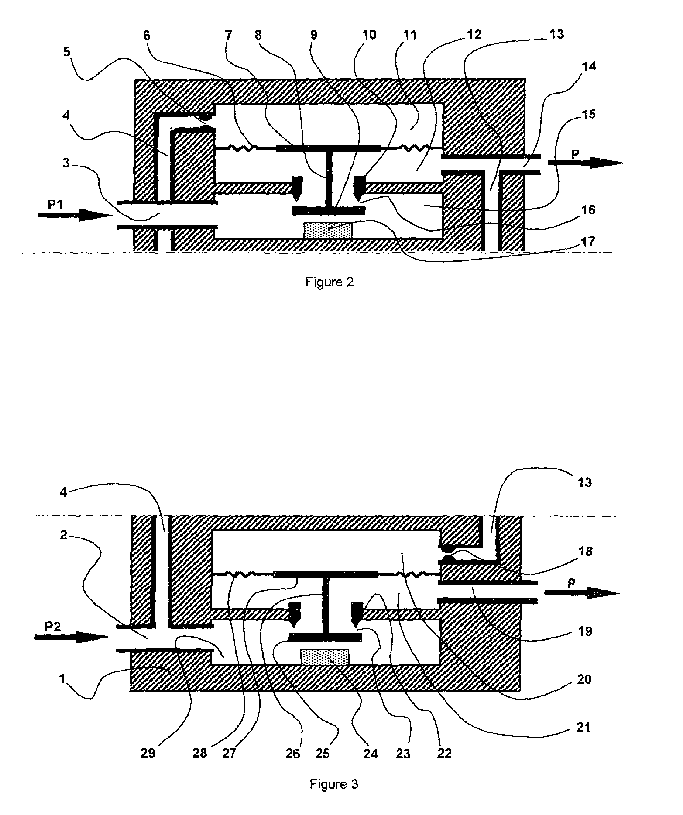

La figure 1 représente en coupe, le dispositif de l'invention. La figure 2 représente en coupe le sous-ensemble limiteur de pression de l'eau chaude piloté par la pression P2 de l'eau froide. La figure 3 représente en coupe le sous-ensemble limiteur de pression de l'eau froide piloté par la pression P de sortie de l'eau chaude.

Le dispositif est un double réducteur de pression qui est contenu dans un corps (1) qui est pseudo cylindrique. L'eau chaude arrive dans le volume (15) à une pression P1 par la canalisation (3). L'eau froide arrive dans le volume (29) à une pression P2 par la canalisation (2).
La canalisation (4) est ramenée dans le plan de la coupe et fait communiquer directement le volume fermé (11) avec la canalisation (2) de telle sorte que la pression dans le volume (11) soit égale à P2. La canalisation (13) fait communiquer directement le volume fermé (20) avec la canalisation (14) de sortie de l'eau chaude de telle sorte que la pression dans le volume (20) soit égale à la pression de sortie de l'eau chaude. L'eau froide sort par la canalisation (19) à la pression du volume (21).
Une membrane circulaire déformable (6) de très faible raideur est fixée au corps (1) et au flasque rigide circulaire (7) de manière à avoir l'étanchéité entre les volumes (11) et (12). Un axe (8) transmet au clapet (9) les mouvements du flasque rigide circulaire (7). Le clapet (9) vient en butée et se ferme sur son siège (10), il est limité dans sa course par la butée (17). La communication entre les volumes (12) et (15) se fait par l'orifice circulaire (16) à section variable. Le diamètre efficace extérieur de la membrane (6) est beaucoup plus grand que le diamètre du siège de clapet (10).
Une membrane circulaire déformable (28) de très faible raideur est fixée au corps (1) et au flasque rigide circulaire (27) de manière à avoir l'étanchéité entre les volumes (20) et (21). Un axe (26) transmet au clapet (25) les mouvements du flasque rigide circulaire (27). Le clapet (25) vient en butée et se ferme sur son siège (22), il est limité dans sa course par la butée (24). La communication entre les volumes (21) et (29) se fait par l'orifice circulaire (23) à section variable. Le diamètre efficace extérieur de la membrane (28) est beaucoup plus grand que le diamètre du siège de clapet (25).
Les restrictions calibrées (5) et (18) sont des orifices de stabilisation.

Si la pression de l'eau chaude P1 est supérieure à la pression de l'eau froide P2, le volume (11) est soumis à la pression P2. L'eau chaude à s'écoule si le clapet (9) a son orifice (16) ouvert. L'orifice (16) est ouvert quand la pression dans le volume (11) est sensiblement égale à la pression dans le volume (12) ce qui permet un équilibre de forces sur le clapet (9) qui maintient son ouverture. La pression dans la canalisation (14) est égale à la pression dans le volume (12) qui est elle-même sensiblement égale à la pression du volume (11). La pression dans la canalisation (14) de sortie eau chaude est donc sensiblement égale à la pression P2. Le volume (20) communique par la canalisation (13) avec la canalisation (14). La pression du volume (20) est donc sensiblement égale à la pression P2.
L'eau froide s'écoule si le clapet (25) a son orifice (23) ouvert. L'orifice (23) est ouvert quand la pression dans le volume (20) est sensiblement égale à la pression dans le volume (21) et permet un équilibre de forces sur le clapet (25) qui maintient son ouverture. La pression dans la canalisation (19) de sortie eau froide est égale à la pression dans le volume (21) qui est elle-même sensiblement égale à la pression du volume (20). La pression dans la canalisation (19) est donc sensiblement égale à la pression P2.
Donc si la pression de l'eau chaude P1 est supérieure à la pression de l'eau froide P2, la pression de sortie de l'eau froide dans la canalisation (14) et la pression de sortie de l'eau chaude dans la canalisation (19) seront sensiblement égales et auront pour valeur la pression P2 qui est la plus petite des pressions d'entrée.

Lorsque la pression de l'eau froide P2 est supérieure à la pression de l'eau chaude P1 et suivant l'équilibre des forces décrit précédemment, le volume (11) est soumis à la pression P2 supérieure à celle du volume (12), l'orifice (16) est grand ouvert, la pression dans le volume (12) est sensiblement égale à P1. La pression dans le volume (20) est alors sensiblement égale à P1. II y a écoulement dans la canalisation de sortie (19) lorsque les pressions dans les volumes (20) et (21) sont sensiblement égales. La pression dans les canalisations (14) et (19) sont alors sensiblement égales à P1.

Les pressions de sortie de l'eau chaude et de l'eau froide sont sensiblement égales avec pour valeur la pression minimum des pressions d'entrée de l'eau chaude et de l'eau froide. Les restrictions (5) et (18) permettent d'ajuster la rapidité et la stabilité de l'équilibreur de pression.

Le dispositif est composé de l'assemblage suivant figure 1 de deux réducteurs de pression pilotés en pression, le réducteur de pression de l'eau chaude suivant la figure 2 et le réducteur de pression de l'eau froide suivant la figure 3. La pression de référence du réducteur de pression de l'eau chaude est la pression du volume (11) qui est elle-même la pression P2 de l'eau froide. La pression de référence du réducteur de pression de l'eau froide est la pression du volume (20) qui est elle-même la pression P de sortie de l'eau froide.

Lorsque l'on inverse les canalisations eau chaude et eau froide, l'eau froide arrive dans la canalisation (3) et sort par la canalisation (14), l'eau chaude arrive dans la canalisation (2) et sort par la canalisation (19). Les pressions de sortie de l'eau chaude et de l'eau froide sont également sensiblement égales avec pour valeur la pression minimum des pressions d'entrée de l'eau chaude et de l'eau froide.

Dans les installations où la pression eau chaude P1 est toujours supérieure à la pression eau froide P2, un dispositif simplifié tel que celui représenté à la figure 2, sans la canalisation (13), est suffisant pour équilibrer les pressions eau chaude et eau froide de sortie à la pression P2.

Dans les installations où la pression eau froide P2 est toujours supérieure à la pression eau chaude P1 un dispositif simplifié tel que celui représenté à la figure 3, sans la canalisation (4), est suffisant pour équilibrer les pressions eau chaude et eau froide de sortie à la pression P1.

## Revendications

1. Dispositif d'équilibrage de pressions eau chaude et eau froide
a) où la pression eau froide P2 est toujours supérieure à la pression eau chaude P1,
b) équipé
- d'une entrée eau froide (2) à la pression P2,
- d'une entrée eau chaude (13) à la pression P1,
- d'une sortie eau froide (19),
**caractérisé en ce qu'**il est constitué par
c) un réducteur de la pression P2 piloté par la pression régnant dans un volume (20) qui communique par canalisation avec l'entrée d'eau chaude et étant égale à la pression P1 de l'eau chaude.

2. Dispositif d'équilibrage de pressions eau chaude et eau froide
a) où la pression eau chaude P1 est toujours supérieure à la pression eau froide P2,
b) équipé
- d'une entrée eau chaude (3) à la pression P1,
- d'une entrée eau froide (4) à la pression P2,
- d'une sortie eau chaude (14),
**caractérisé en ce qu'**il est constitué par
c) un réducteur de la pression P1 piloté par la pression régnant dans un volume (11) qui communique par canalisation avec l'entrée d'eau froide et étant égale à la pression P2 de l'eau froide.

3. Dispositif suivant revendication 1 **caractérisé en ce qu'**il possède une restriction calibrée (18) permettant d'ajuster sa rapidité et sa stabilité.

4. Dispositif suivant revendication 2 **caractérisé en ce qu'**il possède une restriction calibrée (5) permettant d'ajuster sa rapidité et sa stabilité.

5. Dispositif d'équilibrage de pressions eau chaude et eau froide équipé
- d'une entrée d'eau chaude (3) à la pression P1,
- d'une entrée d'eau froide (2) à la pression P2,
- d'une sortie d'eau chaude (14) et
- d'une sortie d'eau froide (19),
**caractérisé en ce qu'**il est constitué par un ensemble comportant deux réducteurs de pression pilotés en pression,
- le réducteur eau chaude étant piloté par la pression régnant dans un volume (11) qui communique uniquement avec l'entrée d'eau froide, par une canalisation (4), ladite pression étant égale à la pression P2 de l'eau froide et
- le réducteur eau froide étant piloté par la pression régnant dans un volume (20) qui communique uniquement avec la sortie d'eau chaude, par une canalisation (13), ladite pression étant égale à la pression de sortie de l'eau chaude.

6. Dispositif d'équilibrage de pressions eau chaude et eau froide équipé
- d'une entrée d'eau froide (3) à la pression P1,
- d'une entrée d'eau chaude (2) à la pression P2,
- d'une sortie d'eau froide (14) et
- d'une sortie d'eau chaude (19),
**caractérisé en ce qu'**il est constitué par un ensemble comportant deux réducteurs de pression pilotés en pression,
- le réducteur eau froide étant piloté par la pression régnant dans un volume (11) qui communique uniquement avec l'entrée d'eau chaude, par une canalisation (4), ladite pression étant égale à la pression P2 de l'eau chaude et
- le réducteur eau chaude étant piloté par la pression régnant dans un volume (20) qui communique uniquement avec la sortie d'eau froide, par une canalisation (13), ladite pression étant égale à la pression de sortie de l'eau froide.

7. Dispositif suivant l'une des revendications 5 ou 6 **caractérisé en ce que** les réducteurs de pression sont contenus dans un corps (1) pseudo cylindrique.

8. Dispositif suivant l'une quelconques des revendications 5 à 7 **caractérisé en ce qu'**il possède des restrictions calibrées (5) et (18) permettant d'ajuster sa rapidité et sa stabilité.

## Claims

1. Device for balancing of pressures of hot water and cold water
a) wherein the cold water pressure P2 is always greater than the hot water pressure P1;
b) equipped with:
- a cold water intake (2) at the pressure P2;
- a hot water intake (13) at the pressure P1;
- a cold water output (19),
**characterised in that** it consists of:
c) a reducer for the pressure P2 which is piloted by the pressure which exists in a volume (20) which communicates by means of piping with the hot water intake, and is equal to the pressure P1 of the hot water.

2. Device for balancing of pressures of hot water and cold water
a) wherein the hot water pressure P1 is always greater than the cold water pressure P2;
b) equipped with:
- a hot water intake (3) at the pressure P1;
- a cold water intake (4) at the pressure P2;
- a hot water output (14),
**characterised in that** it consists of:
c) a reducer for the pressure P1 which is piloted by the pressure which exists in a volume (11) which communicates by means of piping with the cold water intake, and is equal to the pressure P2 of the cold water.

3. Device according to claim 1, **characterised in that** it has a calibrated restriction (18) which makes it possible to adjust its speed and stability.

4. Device according to claim 2, **characterised in that** it has a calibrated restriction (5) which makes it possible to adjust its speed and stability.

5. Device for balancing of pressures of hot water and cold water equipped with:
- a hot water intake (3) at the pressure P1;
- a cold water intake (2) at the pressure P2;
- a hot water output (14); and
- a cold water output (19),
**characterised in that** it consists of an assembly comprising two pressure reducers with piloted pressure;
- the hot water reducer being piloted by the pressure which exists in a volume (11) which communicates only with the cold water intake, via piping (4), the said pressure being equal to the pressure P2 of the cold water; and
- the cold water reducer being piloted by the pressure which exists in a volume (20) which communicates only with the hot water output, via piping (13), the said pressure being equal to the output pressure of the hot water.

6. Device for balancing of pressures of hot water and cold water equipped with:
- a cold water intake (3) at the pressure P1;
- a hot water intake (2) at the pressure P2;
- a cold water output (14); and
- a hot water output (19),
**characterised in that** it consists of an assembly comprising two pressure reducers with piloted pressure;
- the cold water reducer being piloted by the pressure which exists in a volume (11) which communicates only with the hot water intake, via piping (4), the said pressure being equal to the pressure P2 of the hot water; and
- the hot water reducer being piloted by the pressure which exists in a volume (20) which communicates only with the cold water output, via piping (13), the said pressure being equal to the output pressure of the cold water.

7. Device according to either of claims 5 or 6,
**characterised in that** the pressure reducers are contained in a pseudo-cylindrical body (1).

8. Device according to any one of claims 5 to 7,
**characterised in that** it has calibrated restrictions (5) and (18) which make it possible for its speed and stability to be adjusted.

## Patentansprüche

1. Druckausgleichsvorrichtung für Warm- und Kaltwasser,
a) in der der Kaltwasserdruck P2 stets größer ist als der Warmwasserdruck P1,
b) die ausgerüstet ist
- mit einem Kaltwassereingang (2) mit dem Druck P2,
- mit einem Warmwassereingang (13) mit dem Druck P1,
- mit einem Kaltwasserausgang (19),
**dadurch gekennzeichnet, dass** sie
c) einen Druckminderer für den Druck P2 umfasst, der von dem Druck gesteuert wird, der in einem Raum (20) herrscht, der über eine Leitung mit dem Warmwassereingang verbunden ist, und der gleich dem Warmwasserdruck P1 ist.

2. Druckausgleichsvorrichtung für Warm- und Kaltwasser,
a) in der der Warmwasserdruck P1 stets größer ist als der Kaltwasserdruck P2,
b) die ausgerüstet ist
- mit einem Warmwassereingang (3) mit dem Druck P1,
- mit einem Kaltwassereingang (4) mit dem Druck P2,
- mit einem Warmwasserausgang (14),
**dadurch gekennzeichnet, dass** sie
c) einen Druckminderer für den Druck P1 umfasst, der von dem Druck gesteuert wird, der in einem Raum (11) herrscht, der über eine Leitung mit dem Kaltwassereingang verbunden ist, und der gleich dem Kaltwasserdruck P2 ist.

3. Vorrichtung nach Anspruch 1, **dadurch gekennzeichnet, dass** sie eine Drosseleinrichtung (18) aufweist, die die Einstellung ihrer Schnelligkeit und Stabilität ermöglicht.

4. Vorrichtung nach Anspruch 2, **dadurch gekennzeichnet, dass** sie eine Drosseleinrichtung (5) aufweist, die die Einstellung ihrer Schnelligkeit und Stabilität ermöglicht.

5. Druckausgleichsvorrichtung für Warm- und Kaltwasser, die ausgerüstet ist
- mit einem Warmwassereingang (3) mit dem Druck P1,
- mit einem Kaltwassereingang (2) mit dem Druck P2,
- mit einem Warmwasserausgang (14) und
- mit einem Kaltwasserausgang (19),
**dadurch gekennzeichnet, dass** sie aus einer Einheit besteht, die zwei druckgesteuerte Druckminderer umfasst,
- wobei der Warmwasserdruckminderer von dem Druck gesteuert wird, der in einem Raum (11) herrscht, der über eine Leitung (4) nur mit dem Kaltwassereingang verbunden ist, wobei der Druck gleich dem Kaltwasserdruck P2 ist, und
- wobei der Kaltwasserdruckminderer von dem Druck gesteuert wird, der in einem Raum (20) herrscht, der über eine Leitung (13) nur mit dem Warmwasserausgang verbunden ist, wobei der Druck gleich dem Druck des Warmwasserausgangs ist.

6. Druckausgleichsvorrichtung für Warm- und Kaltwasser, die ausgerüstet ist
- mit einem Kaltwassereingang (3) mit dem Druck P1,
- mit einem Warmwassereingang (2) mit dem Druck P2,
- mit einem Kaltwasserausgang (14) und
- mit einem Warmwasserausgang (19),
**dadurch gekennzeichnet, dass** sie aus einer Einheit besteht, die zwei druckgesteuerte Druckminderer umfasst,
- wobei der Kaltwasserdruckminderer von dem Druck gesteuert wird, der in einem Raum (11) herrscht, der über eine Leitung (4) nur mit dem Warmwassereingang verbunden ist, wobei der Druck gleich dem Warmwasserdruck P2 ist, und
- wobei der Warmwasserdruckminderer von dem Druck gesteuert wird, der in einem Raum (20) herrscht, der über eine Leitung (13) nur mit dem Kaltwasserausgang verbunden ist, wobei der Druck gleich dem Druck des Kaltwasserausgangs ist.

7. Vorrichtung nach einem der Ansprüche 5 oder 6, **dadurch gekennzeichnet, dass** die Druckminderer in einem pseudozylindrischen Gehäuse (1) untergebracht sind.

8. Vorrichtung nach einem der Ansprüche 5 bis 7, **dadurch gekennzeichnet, dass** sie Drosseleinrichtungen (5) und (18) aufweist, die die Einstellung ihrer Schnelligkeit und Stabilität ermöglichen.
